# EUROPÄISCHE PATENTANMELDUNG

(11) **EP 2 190 099 A2**
(43) Veröffentlichungstag der Anmeldung: **26.05.2010**
(21) Anmeldenummer: 09172638.0
(22) Anmeldetag: 09.10.2009
(51) Int. Cl.: H02J 7/00

(54) **Akkuladegerät**

(30) Priorität: 19.11.2008 DE 102008043852
(71) Anmelder: HILTI Aktiengesellschaft, 9494 Schaan (LI)
(72) Erfinder: Schiestl, Ulrich, 6845 Hohenems (AT)

(57) **Zusammenfassung**

Die vorliegende Erfindung betrifft ein Akkuladegerät (30) mit einem Gerätegehäuse (40), mit einer Ladeelektronik (33) und mit einer Aufnahme (31) für einen Akkupack (10), die elektrische Gegenkontaktelemente (38) für Kontaktelemente (18) des Akkupacks (10) aufweist. Das Akkuladegerät (30) weist ferner eine Befülleinrichtung zur Befüllung von Gasreservoiren, wie z. B. Druckbehältern, mit gasförmigen Medien auf, die z. B. als Kompressor zur Erzeugung von Druckluft ausgebildet ist.

## Beschreibung

Die vorliegende Erfindung betrifft ein Akkuladegerät, der im Oberbegriff von Patentanspruch 1 genannten Art. Derartige Akkuladegeräte weisen in der Regel einen Netzanschluss zur Stromversorgung und wenigstens eine Aufnahme für einen Akku bzw. Akkupack auf.

Aus der US2007236177A ist ein gattungsgemässes Akkuladegerät mit einem Gehäuse, einer in dem Gehäuse angeordneten Ladeelektronik, einer Aufnahme für einen zu ladenden Akku und mit im Bereich der Aufnahme angeordneten Gegenkontaktelementen für Kontaktelemente des Akkus bekannt.

Mit diesem Akkuladegerät ist das elektrische Wiederaufladen eines Akkus möglich. In einer parallelen Patentanmeldung der Anmelderin wird ein Akkupack beansprucht, der neben einer Speichermöglichkeit für elektrischen Strom auch ein Gasreservoir zur Speicherung eines unter Druck stehenden gasförmigen Mediums, wie z. B. Druckluft aufweist. Mit einem herkömmlichen Ladegerät können dabei nur die Akkuzellen dieses Akkupacks aufgeladen werden, während das Gasreservoir mit einem separaten Ladegerät aufgeladen werden muss.

Die Aufgabe der vorliegenden Erfindung liegt darin, ein Akkuladegerät der vorgenannten Art zu entwickeln, das ein paralleles Aufladen der Akkuzellen mit elektrischer Energie und des Gasreservoirs mit gasförmigem Medium ermöglicht.

Die Aufgabe wird bei einem Akkuladegerät erfindungsgemäss durch die in Anspruch 1 genannten Massnahmen gelöst. Demnach weist das Akkuladegerät eine Befülleinrichtung zur Befüllung von Gasreservoiren, wie z. B. Druckbehältern, mit gasförmigen Medien auf. Hierdurch kann ein an dem Akkuladegerät angesteckter Akkupack gleichzeitig elektrisch aufgeladen und sein Gasreservoir mit gasförmigem Medium bzw. mit Druckluft befüllt werden.

Vorteilhaft weist die Befülleinrichtung einen Kompressor zur Erzeugung von Druckluft auf, der pneumatisch mit wenigstens einem Anschlussmittel für einen Ausgabeport eines Gasreservoirs verbunden ist. Über den (elektrisch betriebenen) Kompressor kann auf einfache Weise Druckluft erzeugt werden, mit der ein als Druckbehälter ausgebildetes Gasreservoir im Akkupack wieder befüllt werden kann. Ferner könnte über das Akkuladegerät mit dem Kompressor auch Druckluft für andere Anwendungen bereitgestellt werden. Das Ladegerät könnte dazu, z. B. über einen Wahlschalter, in verschiedenen Modi betrieben werden, von denen wenigstens einer einen reinen Kompressorbetrieb ermöglicht.

Von Vorteil ist es ferner, wenn die Gegenkontaktelemente und das wenigstens eine Anschlussmittel an einem gemeinsamen Gegenanschlussport angeordnet sind, so dass beim Anbringen des Akkupacks an dem Akkuladegerät, die Kontaktelemente und der Ausgabeport des Akkupacks gleichzeitig mit geräteseitigen Gegenkontakten und Anschlussmitteln verbunden werden.

Günstig ist es auch, wenn die Befülleinrichtung über die Ladeelektronik steuerbar ist. Die Ladeelektronik kann dabei vorzugsweise automatisch erkennen, ob ein (bzw. der richtige) Akkupack auf dem Ladegerät sitzt und so die Befülleinrichtung automatisch einschalten. Ausserdem kann die Ladeelektronik mit der Akkuelektronik kommunizieren und dadurch über entsprechende Sensoren (z. B. Drucksensor, Temperatursensor) am Gasreservoir den Ladevorgang des Gasreservoirs überwachen. Vorteilhaft ist dabei der Kompressor der Befülleinrichtung elektrisch mit der Ladeelektronik verbunden, so dass er über diese in Abhängigkeit der Sensordaten gesteuert werden kann.

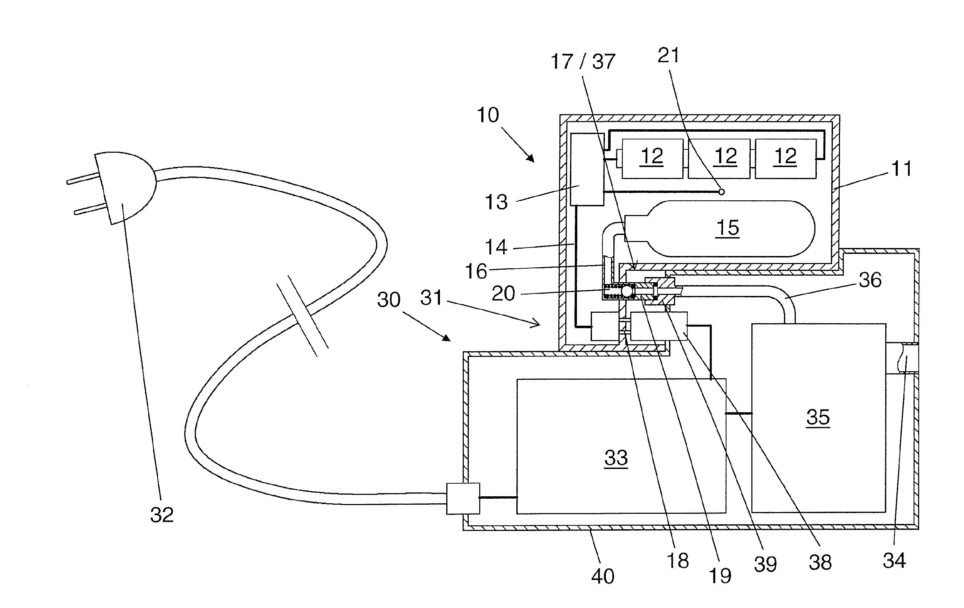

In der Zeichnung, die ein Akkuladegerät 30 mit daran angeordnetem Akkupack 10 zeigt, ist die Erfindung in einem Ausführungsbeispiel dargestellt.

Der Akkupack 10 weist ein Gehäuse 11 und eine Mehrzahl von in dem Gehäuse 11 angeordneten und elektrisch miteinander verknüpften Akkuzellen 12 auf. Der Akkupack 10 kann dabei z. B. als Lithium-Titanat-, NiCd-, NiMH-, Li-lon-, Li-Polymer- oder Li-Fe-Akku ausgebildet sein.

Der Akkupack 10 weist ferner eine als Steuerelektronik ausgebildete Elektronik 13 auf, die elektrisch mit den Akkuzellen 12 verbunden ist und diese überwacht und die über eine elektrische Leitung 14 mit elektrischen Kontaktelementen 18 verbunden ist, die am Gehäuse 11 angeordnet sind. Die Kontaktelemente 18 sind an einem Anschlussport 17 angeordnet, der mit einem Gegenanschlussport 37 eines Akkuladegeräts 30, einer Handwerkzeugmaschine oder ähnlichem verbindbar ist. Die Elektronik 13 ist ferner mit einem Temperatursensor 21, wie z. B. einem NTC (Negative Temperature Coefficient Thermistor), verbunden, wodurch eine Temperaturüberwachung der Akkuzellen 12 ermöglicht wird.

In dem Gehäuse 11 des Akkupacks 10 ist ferner noch ein als Druckbehälter ausgebildetes Gasreservoir 15 für ein unter Druck stehendes gasförmiges Medium, wie z. B. Pressluft, angeordnet. Das Gasreservoir 15 steht dabei über eine Druckleitung 16 in Verbindung mit einem Ausgabeport 19, der benachbart zu den Kontaktelementen 18 am Anschlussport 17 aussen am Gehäuse 11 angeordnet ist. In der Druckleitung 16 ist nahe dem Ausgabeport 19 noch ein Ventil 20 angeordnet, welches unbetätigt ein Ausströmen von Gas bzw. gasförmigen Medium aus dem Gasreservoir 15 verhindert.

Das Akkuladegerät 30 weist ein Gerätegehäuse 40, eine in diesem Grätegehäuse 40 angeordnete Ladeelektronik 33 sowie einen Netzanschluss 32 zur Versorgung mit elektrischer Energie auf. Ferner weist das Akkuladegerät 30 noch eine Befülleinrichtung zur Befüllung von Gasreservoiren 15 mit gasförmigen Medien auf. Die Befülleinrichtung weist einen Kompressor 35 zur Erzeugung von Druckluft (als gasförmiges Medium) auf, der über eine Leitung 36 mit einem Anschlussmittel 39 verbunden ist und der über einen Lufteinlass 34, vorzugsweise gefilterte, Luft ansaugen kann. Das Anschlussmittel 39 ist dabei zusammen mit elektrischen Gegenkontaktelementen 38 an einem Gegenanschlussport 37 für den Anschlussport 17 des Akkupacks 10 im Bereich einer Aufnahme 31 des Akkuladegeräts 30 für den Akkupack 10 angeordnet. Bei einem Anstecken des Akkupacks 10 an die Aufnahme 31 des Akkuladegeräts 30 werden der Anschlussport 17 mit dem Gegenanschlussport 37 gekuppelt und gleichzeitig sowohl eine elektrische Verbindung zwischen den Kontaktelementen 18 und den Gegenkontaktelementen 38 als wie auch eine pneumatische Verbindung zwischen dem Ausgabeport 19 und dem Anschlussmittel 39 hervorgerufen. Gesteuert über die Ladeelektronik 33, die zum einen elektrisch mit den Gegenkontaktelementen 38 und zum anderen elektrisch mit dem Kompressor 35 verbunden ist, werden die Akkuzellen 12 elektrisch geladen und parallel dazu das Gasreservoir 15 des Akkupacks 10 wieder mit gasförmigem Medium in Form von Druckluft befüllt. Der Befüllungsvorgang des Gasreservoirs 15 kann dabei deutlich schneller abgeschlossen sein, als der Ladevorgang der Akkuzellen 12 des Akkupacks 10.

Im Betrieb des Kompressors 35 wird das Ventil 20 am Ausgabeport 19 des Akkupacks 10 durch den vom Kompressor erzeugten Überdruck automatisch geöffnet, um das Befüllen des Gasreservoirs mit Druckluft zu ermöglichen. Das Ventil 20 bleibt dabei so lange geöffnet, bis der Druck im Gasreservoir 15 einen bestimmten Wert erreicht, der dem vom Kompressor erzeugten Überdruck entspricht.

## Patentansprüche

1. Akkuladegerät mit einem Gerätegehäuse (40), mit einer Ladeelektronik (33) und mit einer Aufnahme (31) für einen Akkupack (10), die elektrische Gegenkontaktelemente (38) für Kontaktelemente (18) des Akkupacks (10) aufweist,
**gekennzeichnet durch**
eine Befülleinrichtung zur Befüllung von Gasreservoiren (15) mit gasförmigen Medien.

2. Akkuladegerät, nach Anspruch 1, **dadurch gekennzeichnet, dass** die Befülleinrichtung einen Kompressor (35) zur Erzeugung von Druckluft aufweist, der pneumatisch mit wenigstens einem Anschlussmittel (39) für einen Ausgabeport (19) eines Gasreservoirs (15) verbunden ist.

3. Akkuladegerät, nach Anspruch 1 oder 2, **dadurch gekennzeichnet, dass** die Gegenkontaktelemente (38) und das wenigstens eine Anschlussmittel (39) an einem gemeinsamen Gegenanschlussport (37) angeordnet sind.

4. Akkuladegerät, nach einem der Ansprüche 1 bis 3, **dadurch gekennzeichnet, dass** die Befülleinrichtung über die Ladeelektronik (33) steuerbar ist.

5. Akkuladegerät, nach einem der Ansprüche 1 bis 4, **dadurch gekennzeichnet, dass** der Kompressor (35) elektrisch mit der Ladeelektronik (33) verbunden ist.
